# EUROPÄISCHE PATENTSCHRIFT

(11) **EP 1 565 954 B1**
(45) Veröffentlichungstag und Bekanntmachung des Hinweises auf die Patenterteilung: **31.03.2010**
(21) Anmeldenummer: 03812163.8
(22) Anmeldetag: 01.12.2003
(51) Int. Cl.: H01M 8/02

(54) **BRENNSTOFFZELLE MIT BRENNSTOFF-BEREITSTELLUNGSEINRICHTUNG UND VERFAHREN ZUR HERSTELLUNG**
FUEL CELL WITH FUEL SUPPLY DEVICE AND METHOD FOR PRODUCING THE SAME
PILE A COMBUSTIBLE COMPORTANT UN DISPOSITIF D'APPROVISIONNEMENT DE COMBUSTIBLE ET PROCEDE DE FABRICATION

(30) Priorität: 29.11.2002 DE 10255736
(43) Veröffentlichungstag der Anmeldung: 24.08.2005
(73) Patentinhaber: Micronas GmbH, 79108 Freiburg i. Br. (DE)
(72) Erfinder: LEHMANN, Mirko, 79102 Freiburg (DE); Dr Müller, Claas, 79104 Freiburg (DE)
(74) Vertreter: Göhring, Robert
(86) Internationale Anmeldenummer: PCT/EP2003/013494
(87) Internationale Veröffentlichungsnummer: WO 2004/051775

(56) Entgegenhaltungen:
- EP-A- 1 037 183
- WO-A-00/38260
- US-A- 3 338 746
- US-A- 3 400 305
- US-A- 4 164 172
- US-A1- 2001 016 283
- US-A1- 2001 033 959
- US-A1- 2002 098 399

## Beschreibung

Die Erfindung bezieht sich auf eine Brennstoffzelle mit den oberbegrifflichen Merkmalen des Patentanspruchs 1, eine elektrische Schaltung mit einer derartigen integrierten Brennstoffzelle sowie ein Verfahren zum Herstellen einer solchen Brennstoffzelle sowie eine Sensoreinrichtung.

Eine ähnliche Brennstoffzelle ist aus US 2001/016283 A1 bekannt.

Die elektrische Stromversorgung für elektrisch betriebene Vorrichtungen, Schaltungen und dergleichen wird üblicherweise über externe Energiequellen vorgenommen. Externe Energiequellen sind typischerweise Verbindungen zu einem Stromnetz oder in elektrische Vorrichtungen eingesetzte Batterien oder Akkumulatoren.

Anstelle von Batterien oder Akkumulatoren können auch Brennstoffzellenanordnungen eingesetzt werden. Brennstoffzellen bestehen üblicherweise aus einer ersten und einer zweiten Elektrodenanordnung, von denen eine als Anode und die andere als Kathode dient. Zwischen den beiden Elektrodenanordnungen befindet sich eine Membran-Elektroden-Einheit (MEA) mit katalytischer Eigenschaft, welche als Protonen durchlassende Membran mit katalytischer Beschichtung dient. Weiterhin weist eine derartige Brennstoffzelle eine Brennstoff-Bereitstellungseinrichtung zum Zuführen eines Brennstoffs, typischerweise Wasserstoff, und eine Reaktant-Bereitstellungseinrichtung zum Zuführen eines Reaktans auf. Das Reaktant reagiert zur Stromerzeugung mit Protonen, die aus dem Brennstoff stammen und durch die Membran hindurchgetreten sind.

Aus US 6,312,846 B1 ist eine Brennstoffzelle bekannt, die auf einem Halbleiter-Wafer ausgebildet ist, wobei in den Wafer Kanäle als Leiter für den Brennstoff bzw, das Reaktant und zwischen den Kanälen eine Protonen austauschen lassende Membran ausgebildet ist. Nachteilhaft bei solchen Anordnungen ist, dass zusätzlich ein getrenntes Reservoir für den Brennstoff bereitzustellen ist, welches an den Brennstoff leitenden Kanal angeschlossen ist.

Aus US 6,326,097 B1 ist eine Anordnung bekannt, welche zum Nachladen der Akkumulatoren von beispielsweise einem Mobilfunkgerät ausgebildet ist. Im wesentlichen besteht diese Anordnung aus einer Halterung mit einem elektrischen Anschluss für das mit Strom zu versorgende Gerät, einer Brennstoffzellenanordnung zum Erzeugen des bereitzustellenden Stroms sowie einer Brennstoff-Bereitstellungseinrichtung zum Zuführen des Brennstoffs zu der Brennstoffzellenanordnung. Die Brennstoff-Bereitstellungseinrichtung besteht dabei aus einer Aufnahme für Wasserstoff-Speicherkartuschen, welche nach dem Verbrauch des Brennstoffs ausgetauscht werden können. Derartige Anordnungen sind baulich aufwendig und sinnvoll für die Erzeugung einer größeren Strommenge, wie sie beispielsweise für Mobilfunkgeräte benötigt wird.

Allgemein bekannt sind aus US 6,160,278 und WO 01/69228 A2 auch Wasserstoff-Sensoren, welche als Halbleiterbauelemente ausgebildet sind. Als für Wasserstoff sensitives Material wird dabei Palladium (Pd) als Elektrodenmaterial verwendet.

Die Aufgabe der Erfindung besteht darin, eine Brennstoffzelle mit geringen baulichen Dimensionen bereit zu stellen, welche einen einfachen Aufbau aufweist und zur Abgabe einer bestimmten oder mindest erforderlichen Strommenge ausgelegt ist.

Diese Aufgabe wird durch eine Brennstoffzelle mit den Merkmalen des Patentanspruchs 1 gelöst.

Eine elektrische Schaltung mit einer derartigen Brennstoffzelle ist Gegenstand des Anspruchs 6.

Ein Verfahren zum Herstellen solcher Brennstoffzellen ist im Anspruch 8 beansprucht.

Weiterbildungen der Erfindung sind in Unteransprüchen angegeben.

Ausgegangen wird von einer Brennstoffzelle mit einer ersten Elektrode und einer zweiten Elektrode, von denen eine als Kathode und die andere als Anode ausgebildet ist, einer zumindest Protonen durchlassenden Schicht mit katalytischer Wirkung oder zusätzlich einem katalytischen Material im Bereich zwischen der ersten Elektrode und der zweiten Elektrode, einer Brennstoff-Bereitstellungseinrichtung zum Zuführen eines Brennstoffs, und einer Reaktant-Bereitstellungseinrichtung zum Zuführen eines Reaktants, welches zur Stromerzeugung mit Protonen aus dem Brennstoff reagiert, wobei Brennstoff-Bereitstellungseinrichtung und Reaktant-Bereitstellungseinrichtung auf der Seite der ersten Elektrode bzw. der Seite der zweiten Elektrode angeordnet sind. Dabei als Brennstoff-Bereitstellungseinrichtung für eine Brennstoffzelle eine in der Brennstoffzelle integrierte Schicht zu verwenden, in welcher der Brennstoff bereits eingearbeitet ist, bietet den Vorteil, dass keine separaten Brennstoffzuführungskanäle und dergleichen bereitgestellt werden müssen. Dies vereinfacht den Aufbau erheblich.

Gemäß einer alternativen Ausführungsform wird eine Brennstoffzelle mit einer Reaktant-Bereitstellungseinrichtung bereitgestellt.

Zweckmäßigerweise besteht die Brennstoff-Bereitstellungseinrichtung aus einem mit dem Brennstoff kontaktierten Material, welches bei Bedarf den Brennstoff oder aus diesem erzeugte Protonen abgibt. Als Basismaterial für eine solche Brennstoff-Bereitstellungseinrichtung dient vorzugsweise Palladium aufgrund seiner guten Wasserstoff-Sensibilität, wobei Wasserstoff als der derzeit übliche Brennstoff für Brennstoffzellen verwendet wird.

Als Reaktant dient vorzugsweise Sauerstoff, welcher aus der Umgebungsluft zugeführt werden kann. Die Reaktant-Zuführungseinrichtung ist somit im einfachsten Fall ein Kanal oder eine offene Oberfläche, welche mit dem Außenraum kommuniziert.

Besonders vorteilhaft ist der Einsatz einer Steuereinrichtung für die Aktivierung der Brennstoffzelle bzw. einer Einheit aus mehreren solcher gekoppelter Brennstoffzellen. Eine solche Steuereinrichtung kann einerseits ein Schalter sein, welcher einen Stromkreis zwischen den beiden Elektroden der Brennstoffzelle schlisst. Andererseits kann in besonders bevorzugter Ausführungsform eine Brennstoffzelle bereitgestellt werden, bei der die Reaktant-Bereitstellungseinrichtung aus einem Raum besteht, welcher kein Reaktant aufweist, also z.B. gegenüber der Umgebungsluft evakuiert ist. Die Steuereinrichtung kann dann beispielsweise aus einem Fenster zu diesem evakuierten Raum bestehen, welches durchstoßen werden kann, um den Zutritt von Umgebungsluft und somit Sauerstoff als Reaktant zu der Brennstoffzelle bzw. deren entsprechender Reaktionsfläche zu ermöglichen.

Die Steuereinrichtung kann beispielsweise ein Steuerelement wie den Schalter oder die zu durchstoßende Abtrennung aufweisen, um damit einen Alarm auszulösen. Derart aufgebaute Alarmeinrichtungen können vielfältig verwendet werden, insbesondere zum Signalisieren eines Einbruchs oder zum Signalisieren eines Notfalls bei einer bedürftigen Person. Die Alarmsignale können dabei auf übliche Art und Weise gegeben werden, insbesondere durch Lichtsignale, durch akustische Signale oder durch Funkübertragung zu einer Notfall-Leitzentrale. In letzterem Fall ist insbesondere neben dem Aussenden des eigentlichen Notsignals auch die Übertragung persönlicher Daten des Absenders und vorzugsweise einer über z.B. GPS (Global Position System) ermittelten momentanen Position zweckmäßig.

Möglich ist auch der Einsatz derartiger Brennstoffzellen als Energiespeicher zum Nachladen von elektrisch betriebenen Schaltungen oder Vorrichtungen, welche nur einen minimalen Stromverbrauch aufweisen, so dass der Anschluss einer Batterie oder dass Bereitstellen eines Brennstoff-Reservoirs baulich eingespart werden kann.

Vorteilhafterweise kann eine derartige Brennstoffzelle mit Brennstoff-Bereitstellungseinrichtung direkt in einer Schaltung integriert werden. Ein vorteilhafter Einsatzbereich wären dabei CMOS-Schaltungen. Vorteilhaft ist auch der Einsatz in entsprechenden elektrisch betriebenen Vorrichtungen anstelle des Einsatzes einer Batterie. Eine solche elektrisch betriebene Vorrichtung kann beispielsweise eine Alarmanlage sein, bei der nach dem einmaligen oder mehrmaligen Aktivieren eines Alarms die Brennstoffzelle ausgetauscht wird.

Vorteilhaft ist insbesondere ein modularer Aufbau, welcher den Austausch als Modul nach einem ein- oder mehrmaligen Gebrauch ermöglicht. Ein solches Modul kann nur aus einer Brennstoffzelle mit der Brennstoff-Bereitstellungseinrichtung bestehen, kann aber beispielsweise auch aus einer Schaltung mit integrierter Brennstoffzelle bestehen. Vorteilhafterweise weist ein solches Modul Anschlussmittel auf, beispielsweise Stecker, welche in entsprechende Buchsen einer Schaltung oder einer elektrisch betriebenen Vorrichtung einsetzbar sind.

Vorteilhaft ist auch der Anschluss eines Brennstoff-Sensors, insbesondere Wasserstoff-Sensors bei einer derartigen Brennstoffzelle, wobei der Brennstoff-Sensor in Kontakt mit der den Brennstoff enthaltenden Schicht steht. Bei abnehmendem Brennstoffgehalt kann über den Brennstoff-Sensor ein Warnsignal ausgegeben werden, welches anzeigt, dass die Brennstoffzelle auszutauschen ist.

Durch das Koppeln mehrerer solcher Brennstoffzellen ist es je nach der Wahl einer Parallel- oder einer Reihenschaltung möglich, die verfügbare Strommenge und/oder die Spannung zu erhöhen. Dabei können vorteilhafterweise mehrere Brennstoffzellen auf einer Chipfläche angeordnet sein, wobei diese über einer gemeinsame Polyleitung parallel geschaltet sind.

Da es sich bei solchen Zellen um Bauelemente aus einfachen und reinen Werkstoffen handelt, sind diese Brennstoffzellen auch einfach zu recyceln.

Vorstehende Vorteile ergeben sich entsprechend auch für den Fall einer Reaktant-Bereitstellungseinrichtung. Idealerweise kann eine derartige Brennstoffzelle auch sowohl eine Brennstoff- als auch eine Reaktant-Bereitstellungseinrichtung aufweisen.

Als Brennstoff wird vorzugsweise Wasserstoff und als Reaktant Sauerstoff betrachtet. Jedoch sind auch beliebige andere Brennstoffe und entsprechende Reaktanten einsetzbar. Insbesondere sind die Begriffe Brennstoff und Reaktant weit auszulegen, wobei letztendlich z.B. auch der Sauerstoff als Brennstoff und der Wasserstoff als zugeordnetes Reaktant anzusehen sind.

Möglich sind auch Ausführungsformen, bei denen sowohl der Brennstoff als auch das Reaktant in den Elektroden oder in den Elektroden benachbarten Materialien bereitgestellt werden.

Ausführungsbeispiele werden nachfolgen anhand der Zeichnung näher erläutert. Es zeigen:
- Fig. 1: eine Brennstoffzelle mit Brennstoff- Bereitstellungseinrichtung auf einem Träger in einfacher Ausführungsform;
- Fig. 2: eine Brennstoffzelle in bevorzugter Ausführungsform in Verbindung mit einer Schaltung,
- Fig. 3: eine weitere Schaltungsanordnung mit einer Brennstoffzelle und einer Schaltung in einem Reaktant-freien Raum,
- Fig. 4: eine alternative Ausführungsform mit alternativem Elektrodenaufbau und
- Fig. 5: eine weitere Ausführungsform mit noch anderem Elektrodenaufbau und einer Verschaltung als Sensor.

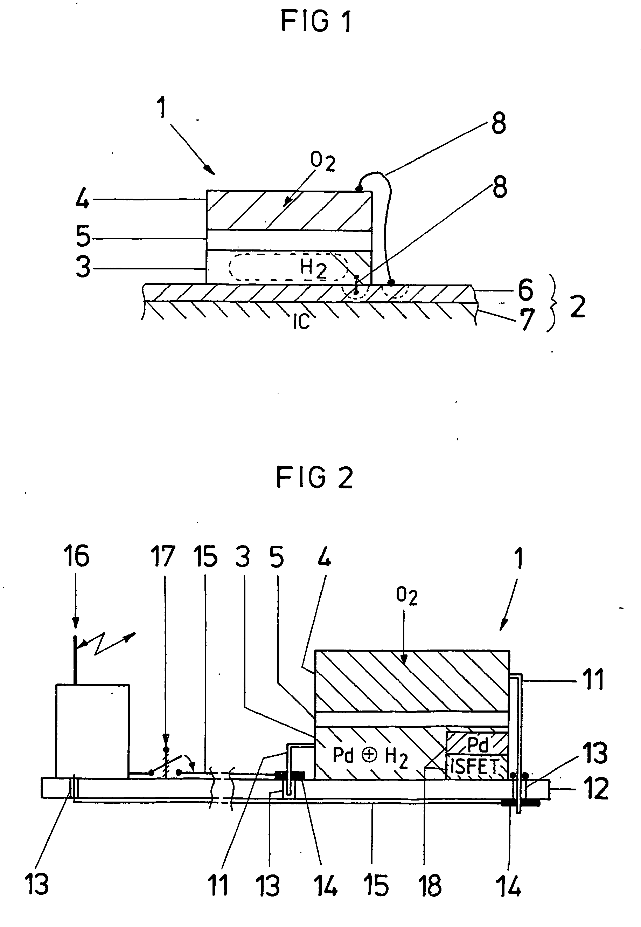

Wie aus Fig. 1 ersichtlich, besteht eine Brennstoffzelle im wesentlichen aus einer ersten Elektrode 3 und einer zweiten Elektrode 4 bzw. entsprechenden Elektrodenanordnungen. Die beiden Elektroden 3, 4 sind zumindest durch eine Protonen durchlassende Schicht 5 in Form vorzugsweise einer katalytischen Membran ausgebildet. Die Elektroden 3, 4 sind als Anode bzw. Kathode ausgebildet und weisen elektrische Anschlüsse 8 auf. Beim dargestellten Ausführungsbeispiel ist die erste Elektrode 3 direkt auf einem Träger 2 angeordnet, so dass eine direkte Verbindung zu einem entsprechend leitfähigen Bereich des Trägers 2 erfolgen kann. Für den Anschluss der zweiten Elektrode 4 wird beispielsweise eine Kontaktierung 8 in Form einer Leiterbahn ausgebildet, die von der zweiten Elektrode 4 aus zu der Oberfläche des Trägers 2 führt. Der Träger 2 besteht in besonders bevorzugter Ausführungsform oberseitig, dass heißt der Brennstoffzelle 1 zugewandt, aus einem Polysilizium 6 mit entsprechender Strukturierung bzw. Ausbildung entsprechend dotierter Bereiche. Das Polysilizium 6 bildet eine Übergangsschicht zu einer darunter angeordneten integrierten Schaltung 7 (IC), welche mit Strom aus der Brennstoffzelle 1 zu versorgen ist.

Wie für Brennstoffzellen üblich, tritt von der Seite der ersten Elektrode 3 aus Brennstoff heran, welcher vorzugsweise aus Wasserstoff H₂ besteht. Der Brennstoff reagiert mit der katalytischen Schicht 5 oder entsprechenden Elementen in dem Material der ersten Elektrode 3 derart, dass Wasserstoffionen, dass heißt Protonen, freigegeben werden. Diese Protonen treten durch die Protonen durchlassende Schicht 5 in Richtung der zweiten Elektrode 4 hindurch. Im Bereich der zweiten Elektrode 4 reagieren die Protonen mit einem in diesen Bereich herangeführten Reaktant, vorzugsweise Sauerstoff O₂. Über die elektrischen Leiter 8 entsteht bei zwischen diesen geschlossenem Stromkreis ein entsprechender Stromfluss.

Wie aus Fig. 1 ersichtlich, kann das Reaktant O₂ von der Umgebung aus direkt an die frei zugängliche zweite Elektrode 4 gelangen, so dass mit Blick auf das Reaktant ein Betrieb in jedem Raum mit Sauerstoff-haltiger Luft möglich ist. Bei der dargestellten Ausführungsform besteht die zweite Elektrode 4 aus einer Diffusionsschicht, die den Ein- und Durchtritt des Reaktants O₂ ermöglicht.

Die Brennstoff-Bereitstellungseinrichtung besteht vorteilhafterweise direkt aus der ersten Elektrode 3 und/oder einer dieser benachbarten weiteren Schicht selber. Diese erste Elektrode 3 bzw. die weitere Schicht enthält Brennstoff, dass heißt vorzugsweise Wasserstoff H₂. Bei Bedarf wird dieser Brennstoff aus dem Material der ersten Elektrode 3 bzw. weiteren Schicht vergleichbar abgegeben, wie das ansonsten aus entsprechenden Brennstoff-Zufuhrkanälen von Brennstoffzellen gemäß dem Stand der Technik bekannt ist.

Zwar erscheint auf den ersten Blick eine derartige Anordnung nachteilhaft, da nur eine begrenzte Menge Brennstoff zur Verfügung steht, jedoch überwiegt bei insbesondere Vorrichtungen mit einem nur sehr geringen und möglicherweise nur einmaligen Strombedarf der bauliche Vorteil durch die geringe Dimensionierbarkeit, da keine zusätzlichen Brennstoff-Zufuhrkanäle und separaten Brennstoff-Reservoirs erforderlich sind.

Besonders einfach ist die Herstellung einer solchen Brennstoffzelle mit der Brennstoff-Bereitstellungseinrichtung integriert in ein Halbleiter-Herstellungsverfahren, beispielsweise in einen CMOS-Prozess (CMOS: complementary symmetry metal-oxide semiconductor transistor / Complementär-Feldeffekttransistor mit Metall-Oxide-Halbleiter-Aufbau). Dabei wird bei der Herstellung der Schicht zur Ausbildung der ersten Elektrode 3 oder der weiteren dazu benachbarten Schicht ein mit dem Brennstoff beaufschlagtes Material auf eine Trägerschicht aufgebraucht. Besonders vorteilhaft ist die Kombination von kontaktiertem Palladium (Pd), welches während oder nach dem Abscheidungsprozess mit Wasserstoff beaufschlagt wird. Danach werden die Membran bzw. die Protonen durchlassende Schicht 5 und weitere für eine Brennstoffzelle notwendige Materialien und Schichten aufgebracht.

Beispielsweise kann eine erste Elektrode 3 aus einer Palladium-Schicht mit einer Fläche von 1 mm² mit einer Mächtigkeit von 1 µm während des Herstellungsprozesses mit Wasserstoff gesättigt werden. Bevorzugtes Ziel bei einer solchen Anordnung ist es, mit diesem Wasserstoff auszukommen, also nicht irgendwelche zusätzliche Zufuhreinrichtungen für Wasserstoff oder entsprechende Energieträger vorzusehen. Die Sauerstoffzufuhr erfolgt vorteilhafterweise über die Umgebungsluft. Durch ein einmaliges Beaufschlagen von Wasserstoff kann bei dem beschriebenen Beispiel gemäß ersten Berechnungen ein zehn Sekunden andauernder Stromfluss mit einer Stromstärke von 1 µA erzeugt werden. Einfache Halbleiterschaltungen bzw. Chip können auf diese Art und Weise mit einer integrierten Stromquelle versehen werden, um beispielsweise eine Alarmanlage auszubilden.

Ein Einsatz ist somit für vorzugsweise in Notfällen zu bedienenden Schaltungen und Vorrichtungen besonders vorteilhaft. Eine dafür beispielhafte Anordnung ist Fig. 2 zu entnehmen.

Wie aus Fig. 2 ersichtlich, ist nicht nur die vorstehend beschriebene integrierte Anordnung einer Brennstoffzelle 1 mit einem Träger 2 möglich, sondern auch eine modulare Anordnung einer Brennstoffzelle 1, welche auf einen Träger 12 austauschbar aufgesteckt werden kann. Im wesentlichen besteht die Brennstoffzelle 1 dabei wieder aus dem vorstehend beschriebenen Aufbau, weshalb auf vergleichbare Bauelemente nicht nochmals eingegangen wird.

Zum Anschluss der ersten und zweiten Elektrode 3, 4 dienen wiederum elektrische Leiter, welche beim dargestellten Ausführungsbeispiel in bevorzugter Weise seitlich an den Elektroden 3, 4 angeordnet und als Kontaktstifte 11 ausgebildet sind. Diese Kontaktstifte 11 führen nach unten hin in Richtung des als Platine ausgebildeten Trägers 12 und durch Kontaktstift-Aufnahmen bzw. Bohrungen 13 in diesem hinein bzw. durch diesen Träger 12 hindurch. Im Bereich der Bohrungen 13 sind jeweils Kontakte 14 bereitgestellt, welche einen Kontakt zwischen entsprechenden elektrischen Leitern 15 auf dem bzw. in dem Träger 12 und den Kontaktstiften 11 herstellen. Die Bohrungen 13 und/oder die Kontakte 14 sind dabei derart dimensioniert und/oder vom Material her beschaffen, dass sie den Kontaktstiften 11 einen ausreichenden Halt bieten, so dass die Brennstoffzelle 1 über die Kontaktstifte 11 lösbar aber ausreichend fest auf dem Träger 12 angeordnet werden kann.

Bei dem dargestellten Ausführungsbeispiel dient die Brennstoffzelle 1 zur Stromversorgung einer Schaltung 16, welche ebenfalls auf dem Träger 12 angeordnet ist. Die Schaltung 16 wird dabei über die beiden elektrischen Leiter 15 mit Strom versorgt. Einer der beiden Leiter 15 führt dabei durch eine Schalteinrichtung 17 hindurch, die als einfacher Tastschalter ausgebildet sein kann. Möglich ist als Schalter aber auch jegliche andere Form von Schalteinrichtungen, insbesondere Lichtsensor-Schalteinrichtungen, auf akustische Signale reagierende Schalteinrichtungen, Bewegungsmelder und dergleichen. Nach dem Aktivieren der Schalteinrichtung 17 wird der Stromkreis geschlossen und zur Versorgung der Schaltung 16 der elektrochemische Prozess in der Brennstoffzelle aktiviert. Wasserstoff H₂, der sich in dem Material der ersten Elektrode 3 oder einer dazu benachbarten Schicht befindet, wird aufgespalten und Protonen treten durch die Protonen durchlassende Schicht 5 zu der zweiten Elektrode 4, wo eine Reaktion mit Sauerstoff O₂ aus der Umgebungsluft stattfindet, wobei Strom erzeugt wird.

Ist die Schaltung 16 beispielsweise eine Alarmanlage, so kann durch das Aktivieren der Schalteinrichtung 17 ein Alarm ausgelöst werden, beispielsweise durch das Abgeben eines Warntones, eines Lichtsignals oder das Aussenden eines elektromagnetischen Signals über eine Funkschnittstelle oder eine leitungsgebundene Schnittstelle zu einem Empfänger in beispielsweise einer Notfallzentrale.

Ein solches Signal kann dabei vorzugsweise neben der Warninformation auch eine codierte Information über den Sender bzw. dessen Träger oder Installationsort sowie bei Verwendung als mitgeführter Warneinrichtung vorzugsweise auch eine Ortsangabe übertragen. Aktuelle momentane Ortsinformationen können beispielsweise durch eine Kopplung mit einem GPS-Empfänger beschafft werden.

Alternativ zu der Befestigung der Brennstoffzelle 1 am Träger 12 über die Kontaktstifte 11 können auch zusätzliche oder andere Befestigungselemente bereit gestellt werden. Möglich ist insbesondere auch die Befestigung der Brennstoffzelle 1 auf Biosensoren und dergleichen.

Vorteilhafterweise weist die Anordnung auch einen Brennstoffsensor 18 auf, vorzugsweise einen Wasserstoffsensor, um den Gehalt bzw. Restgehalt an Brennstoff in der ersten Elektrode 3 bzw. einer dazu benachbarten Schicht oder beiden zu bestimmen. Ein solcher Brennstoffsensor 18 besteht beispielsweise aus einem ISFET (Ion-selective Field Effect Transistor) mit aufgesetzter Palladiumschicht Pd oder einem Palladium-Widerstand. Dieser Brennstoffzellensensor 18 wird mit entsprechenden Leitern an weitere Schaltungskomponenten angeschlossen, die zur Signalisierung eines Brennstoffmangels dienen, so dass die Brennstoffzelle bei Bedarf ausgetauscht werden kann.

Anstelle eines solchen Brennstoffzellensensor 18 oder zusätzlich dazu kann aber auch eine Schaltung zur Erfassung des verbleibenden Brennstoffs verwendet werden, welche eine Messung des Widerstandes der Brennstoff-Bereitstellungseinrichtung durchführt und den Messwert mit Sollwerten oder mit solchen früheren derartiger Testmessungen vergleicht.

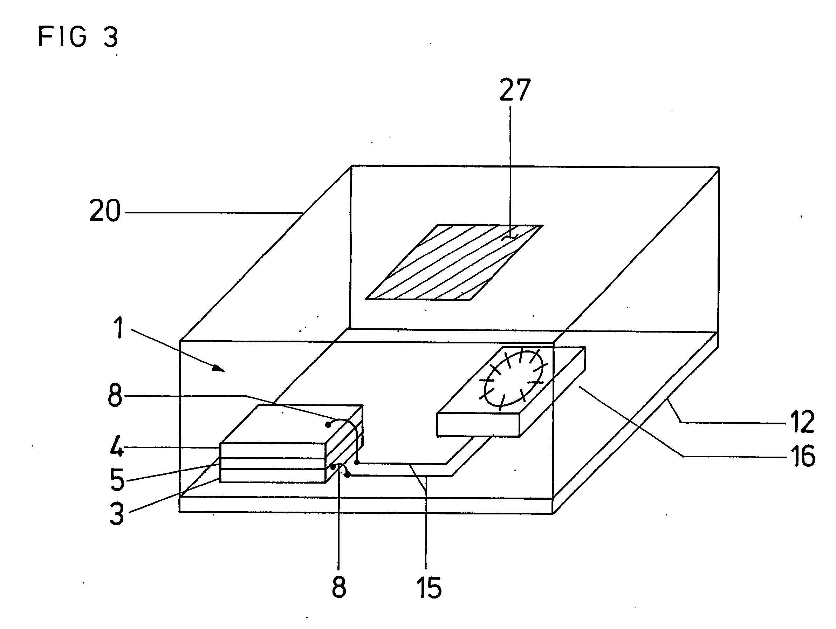

Ein weiteres Ausführungsbeispiel ist in Figur 3 dargestellt. Baulich gleiche oder gleichwertige Elemente werden unter Verweis auf die vorstehenden Ausführungsbeispiele wiederum nicht wiederholt benannt. Im wesentlichen weist das Ausführungsbeispiel einen Träger 12 auf, auf den eine Brennstoffzelle 1 mit einer ersten Brennstoff enthaltenden Elektrode 3, einer Protonen durchlassenden Schicht 5 und einer zweiten Elektrode 4 aufgesetzt sind. Von der Brennstoffzelle 1 aus führen elektrische Leiter 8, 15 zu einer ebenfalls auf dem Träger 12 angeordneten Schaltung 16. Diese kann beispielsweise wieder eine Alarmanlage, ein Sensor, eine Speichereinrichtung oder dergleichen sein. Im Gegensatz zum zweiten Ausführungsbeispiel ist bei dieser Anordnung keine übliche Schalteinrichtung bereitgestellt, welche im Normalzustand zumindest einen der beiden elektrischen Leiter 15 unterbricht. Anstelle dessen befindet sich die gesamte Anordnung in einem Gehäuse 20, dessen Innenraum frei von dem für eine Stromerzeugung erforderlichen Reaktant ist. Beim üblichen Beispiel würde sich innerhalb des Gehäuses 20 kein Sauerstoff befinden. Um die Stromerzeugung zu aktivieren, befindet sich in einer der Wandungen des Gehäuses 20 ein im Normalbetrieb verschlossener Bereich, welcher als Schalteinrichtung 27 dient. Durch das Öffnen dieses geschlossenen Bereichs, vorzugsweise einer durchstossbaren Folie oder eines zu öffnenden Ventils, tritt Umgebungsluft und somit Sauerstoff in den Innenraum des Gehäuses 20. Dies führt zu einer Aktivierung des elektrochemischen Prozesses und somit zu einem Stromfluss durch die Schaltung 16. Gemäß besonders bevorzugter Ausführungsform wird der Innenraum des Gehäuses 20 evakuiert, so dass beim Öffnen der Schalteinrichtung 27 schlagartig oder bei Verwendung des steuerbaren Ventils gesteuert Umgebungsluft in den zuvor evakuierten Innenraum des Gehäuses 20 eintritt. Dadurch kann die Aktivierung der Stromerzeugung beschleunigt werden.

In einfachster Ausführungsform kann die Schalteinrichtung 27 aber auch nur aus einem abnehmbaren Gehäuse oder einer abziehbaren Folie bestehen, die um die gesamte Anordnung oder auch nur um die zweite Elektrode 4 bzw. den Bereich, in dem das Reaktant mit den Protonen reagieren kann, ausgebildet sein.

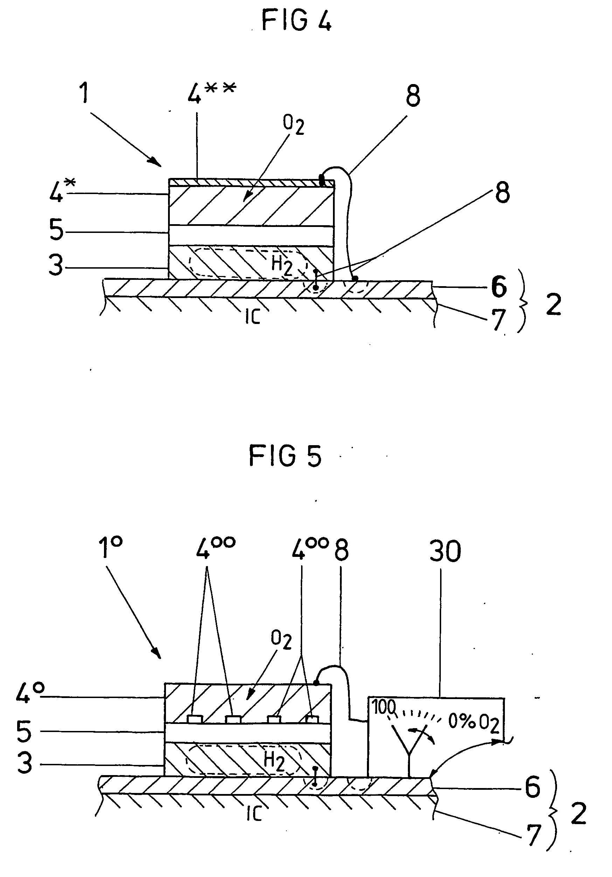

Fig. 4 veranschaulicht eine alternative Elektrodenanordnung. Anstelle einer einstückigen Elektrode 4 aus einer Diffusionsschicht besteht die Elektrode mehrteilig aus einer Diffusionsschicht 4* und einer eigentlichen Elektrodenabdeckung 4**. Die Elektrodenabdeckung 4** besteht aus einem massiven, elektrisch leitenden Material und dient zum Zu- bzw. Abführen von Strom. Die Diffusionsschicht 4* lässt das Reaktant O₂ von der Seite oder entsprechenden Öffnungen in der Elektrodenabdeckung 4** her eintreten.

Fig. 5 veranschaulicht eine weitere Elektrodenanordnung. Die gesamte Elektrode 4° besteht aus einem elektrisch gut leitfähigen Material, welches jedoch den Durchtritt des Reaktant O₂ nicht oder nur unzureichend zulässt. Zum Zuführen des Reaktanten O₂ zu der Membran-Elektroden-Einheit 5 (MEA) mit katalytischer Eigenschaft dienen Reaktant-Kanäle 4°° oder sonstige Durchtrittspassagen in der Elektrode. Die Reaktant-Kanäle 4°° sind vorzugsweise der Membran-Elektroden-Einheit 5 benachbart ausgebildet.

Bei den dargestellten Ausführungsbeispielen sind nur die für die prinzipielle Funktionsweise relevanten Bauelemente skizziert. Weitere für die Funktion erforderliche Bauelemente sind gemäß dem Wissen des Fachmanns einzusetzen. Beispielsweise kann eine gegenüber dem Reaktant isolierende Beschichtung um den unteren Brennstoffzellenbereich ausgebildet werden, so dass ein seitlicher Zutritt des Reaktants aus der Umgebungsluft an die erste Elektrode 3 vermieden werden kann.

Während vorstehend Ausführungsbeispiele mit einer den Brennstoff bereitstellenden Schicht beschrieben sind, kann in entsprechender Art und Weise zusätzlich oder alternativ eine das Reaktant bereitstellende Schicht ausgebildet werden, wobei dann der Brennstoff von außen zugeführt wird.

Im wesentlichen ist dafür dann der Aufbau wie vorstehend beschrieben. Anstelle den Brennstoff, vorliegend Wasserstoff H₂ in eine Schicht einzubringen, wird dann das Reaktant, vorliegend insbesondere Sauerstoff O₂ in eine Schicht eingebracht. Zweckmäßigerweise wird der Reaktionsbereich und ein eventuell vorhandener Bereich mit einer Brennstoff enthaltenden Schicht derart abgeschirmt, dass von der Außenseite her kein anderes Reaktant eindringen und den Strom erzeugenden Prozess auslösen kann.

Entsprechend wird für den Betrieb dann von Außen her der Brennstoff zugeführt. Bei einer kombinierten Lösung mit einer den Brennstoff und einer das Reaktant zuführenden Schicht wird eine entsprechende Schalteinrichtung bereitgestellt, nach deren Betätigung die elektro-chemische Reaktion beginnt und Strom bereitstellt.

Vorteilhafterweise kann eine derartige Brennstoffzelle auch als Sensor eingesetzt werden, um eine verfügbare Menge des Reaktants in der Umgebung zu bestimmen. Wie aus Fig. 5 ersichtlich, wird dazu z.B. mit einer Messeinrichtung 30 die Stromstärke des von der Brennstoffzelle erzeugten Stroms gemessen, welche in direktem Verhältnis zu der Menge des Reaktants steht, welches aus der Umgebung in die Brennstoffzelle gelangt.

Sensoren können somit zur Bestimmung einer Menge eines Reaktants in der Umgebung der Brennstoffzelle verwendet werden, indem Strommenge oder Spannung des erzeugten Stroms bestimmt und angezeigt oder ausgewertet werden.

Ein solcher Sensor kann nicht nur zur Anzeige einer bestimmten Umgebungsbedingung verwendet werden. Natürlich kann als Reaktant auch Wasserstoff angesehen werden, wobei dann die Funktion des Brennstoffs von Sauerstoff übernommen wird.

Beispielsweise kann der Sensor auch als Warneinrichtung verwendet werden, um z.B. vor kohlenstoffhaltigen Gasen zu warnen, die in dieser Umgebung üblicherweise nicht auftreten oder aus Sicherheitsgründen nicht auftreten dürfen. Bei derartigen Warneinrichtungen ist die Verwendung der beschriebenen Schichten mit integriertem Brennstoff oder Reaktant besonders vorteilhaft einsetzbar. Im Regelfall wird z.B. nur im Notfall bei einem Gasleck eine Alarmauslösung erforderlich. Derartige Warneinrichtungen mit einer externen Brennstoffzufuhr auszustatten wäre daher unwirtschaftlich. Ein solcher Sensor mit dem integrierten Reaktant oder Brennstoff für eine begrenzte Betriebszeit ist somit besonders in Bereichen vorteilhaft einsetzbar, in denen nur selten oder im Regelfall nie Strom bzw. der Brennstoff benötigt wird.

Vorteilhaft sind solche Sensoren aber auch in Verbindung mit einer externen Brennstoff- oder Reaktant-Zuführungseinrichtung einsetzbar. Einem Sensor, dem über eine nachfüllbare oder austauschbare Gaspatrone oder über eine fest installierte Leitung der Brennstoff bzw. das Reaktant kontinuierlich zugeführt wird, kann sehr vorteilhaft zum messen von entsprechend dem Reaktant bzw. dem Brennstoff in der Umgebung eingesetzt werden. Durch diese Zuführungseinrichtung kann einerseits ein dauerhafter Betrieb als Sensor ermöglicht werden. Andererseits kann auch sichergestellt werden, dass die Zufuhr des Brennstoffs oder Reaktants so kontinuierlich erfolgt, dass Schwankungen vermieden werden und aus Schwankungen der gemessenen Stromstärke oder Spannung direkt ohne eine zweite variable Größe auf die Intensität des Reaktants bzw. Brennstoffs in der Umgebung geschlossen werden kann.

## Patentansprüche

1. Brennstoffzelle mit
- einer ersten Elektrode (3) und einer zweiten Elektrode (4), von denen eine als Kathode und die andere als Anode ausgebildet ist,
- einer zumindest Protonen durchlassenden Schicht (5) mit katalytischer Wirkung oder zusätzlich einem katalytischen Material im Bereich zwischen der ersten Elektrode (3) und der zweiten Elektrode (4),
- einer Brennstoff-Bereitstellungseinrichtung zum Zuführen eines Brennstoffs, und
- einer Reaktant-Bereitstellungseinrichtung zum Zuführen eines Reaktants, welches zur Stromerzeugung mit Protonen aus dem Brennstoff reagiert, wobei Brennstoff-Bereitstellungseinrichtung und Reaktant-Bereitstellungseinrichtung auf der Seite der ersten Elektrode bzw. der Seite der zweiten Elektrode angeordnet sind,
**dadurch gekennzeichnet, dass**
- der Brennstoff zum Erzeugen einer vorgegebenen Strommenge in dem Material einer der als Brennstoff-Bereitstellungseinrichtung (3) ausgebildeten Elektrode (3) integriert ist, und dass
- keine zusätzlichen Brennstoff-Zuführkanäle und separate Brennstoff-Reservoirs vorgesehen sind.

2. Brennstoffzelle nach Anspruch 1, bei der
die Brennstoff-Bereitstellungseinrichtung (3) aus einem kontaktierten Material besteht, welches mit dem Brennstoff beaufschlagt ist.

3. Brennstoffzelle nach Anspruch 1 oder 2, bei dem die Brennstoff-Bereitstellungseinrichtung (3) Palladium (Pd) enthält.

4. Brennstoffzelle nach einem vorstehenden Anspruch, bei der als Brennstoff Wasserstoff in der Brennstoff-Bereitstellungseinrichtung (3) integriert ist.

5. Brennstoffzelle nach einem vorstehenden Anspruch, bei der die Reaktant-Zuführungseinrichtung zum Zuführen des Reaktants (O₂) aus dem zumindest die zweite Elektrode oder dem den Reaktionsbereich umgebenden Raum besteht.

6. Elektrische Schaltung (7; 16) mit
einer Brennstoffzelle (1) nach einem der Ansprüche 1 bis 5, die eine Brennstoff-Bereitstellungseinrichtung (3) nach einem der vorstehenden Ansprüche aufweist.

7. Elektrische Schaltung nach Anspruch 6,
ausgebildet als CMOS-Schaltung.

8. Verfahren zum Herstellen einer Brennstoffzelle, bei dem
eine erste Elektrode (3), eine zweite Elektrode (4) und
eine diese trennende Protonen durchlassende Schicht (5) mit katalytischer Wirkung oder zusätzlich zur Schicht (5)
ein katalytisches Material zwischen den Elektroden (3, 4) ausgebildet wird,
**dadurch gekennzeichnet, dass** eine Brennstoff-Bereitstellungseinrichtung oder eine Reaktant-Bereitstellungseinrichtung einstückig mit einer der Elektroden (3) ausgebildet wird, wobei das Material der Brennstoff-Bereitstellungseinrichtung bei deren Herstellung oder anschließend mit Brennstoff beaufschlagt wird.

9. Brennstoffzelle nach einem vorstehenden Anspruch,
**dadurch gekennzeichnet, dass**
- das Reaktant zum Erzeugen einer vorgegebenen Strommenge in dem Material einer der als Reaktant-Bereitstellungseinrichtung (3) ausgebildeten Elektroden integriert ist
- und die Brennstoffzelle derart ausgebildet ist, dass Reaktant nur von dieser Reaktant-Bereitstellungseinrichtung ausgehend mit dem Brennstoff reagieren kann, und dass keine externen Zuführungen für das Reaktant vorgesehen sind.

10. Brennstoffzelle nach Anspruch 9, bei der die Reaktant-Bereitstellungseinrichtung (3) aus einem kontaktierten Material besteht, welches mit dem Reaktant beaufschlagt ist.

11. Brennstoffzelle nach Anspruch 9 oder 10, bei dem als Reaktant Sauerstoff in der Reaktant-Bereitstellungseinrichtung (3) integriert ist.

12. Elektrische Schaltung (7; 16), insbesondere CMOS-Schaltung, mit
einer Brennstoffzelle (1) nach einem der Ansprüche 9-11, die eine Reaktant-Bereitstellungseinrichtung (3) nach einem der Ansprüche 14 - 16 aufweist.

## Claims

1. Fuel cell comprising
- a first electrode (3) and a second electrode (4), one of which is configured as the cathode and the other as the anode,
- a layer (5), permeable at least to protons, that has a catalytic effect or additionally a catalytic material is formed in the area between the first electrode (3) and the second electrode (4),
- a fuel supply device for supplying a fuel, and
- a reactant supply device for supplying a reactant, which reacts with protons from the fuel to generate a current, the fuel supply device and the reactant supply device being disposed on the first electrode's end or on the second electrode's end, **characterized in that**
- the fuel for generating a defined quantity of electricity is integrated into the material of one of the electrodes (3) configured as the fuel supply device (3) and that
- no additional fuel supply channels and separate fuel reservoirs are provided.

2. Fuel cell according to claim 1, in which the fuel supply device (3) comprises a contacted material, that is treated with the fuel.

3. Fuel cell according to claim 1 or 2, in which the fuel supply device (3) contains palladium (Pd).

4. Fuel cell according to an above claim, in which hydrogen is integrated into the fuel supply device (3) as the fuel.

5. Fuel cell according to an above claim, in which the reactant infeed device for the infeed of the reactant (O₂) comprises the space surrounding at least the second electrode or the space surrounding the reaction area.

6. Electrical circuit (7; 16) comprising a fuel cell (1) according to one of claims 1 - 5, which has a fuel supply device (3) according to one of the above claims.

7. Electrical circuit according to claim 6, formed as CMOS circuit.

8. Method for producing a fuel cell, in which a first electrode (3), a second electrode (4) and a proton-permeable layer (5), separating them, that has a catalytic effect are created or in addition to the layer (5) a catalytic material is formed between the electrodes (3, 4), **characterized in that** a fuel supply device or a reactant supply device is configured as an integral part of one of the electrodes (3), the material of the fuel supply device being treated with fuel during its preparation or thereafter.

9. Fuel cell according to an above claim, **characterized in that**
- the reactant for generating a defined quantity of electricity is integrated into the material of one of the electrodes configured as a reactant supply device (3)
- and the fuel cell is designed so that only reactant from this reactant supply device can react with the fuel, and that no external supply devices are provided for the reactant.

10. Fuel cell according to claim 9, in which the reactant supply device (3) comprises a contacted material, that is treated with the reactant.

11. Fuel cell according to claim 9 or 10, in which oxygen is integrated into the reactant supply device (3) as reactant.

12. Electrical circuit (7; 16), in particular CMOS circuit, comprising a fuel cell (1) according to one of claims 9 - 11, which comprises a reactant supply device (3) according to one of claims 14 - 16.

## Revendications

1. Pile à combustible comprenant :
- une première électrode (3) et une seconde électrode (4), l'un servant de cathode et l'autre d'anode,
- au moins une couche (5) perméable aux protons, à effet catalytique ou en plus un matériau catalytique dans la zone comprise entre la première électrode (3) et la seconde électrode (4),
- une installation de fourniture de combustible pour fournir un combustible, et
- une installation de fourniture de réactif pour fournir un réactif réagissant avec les protons du combustible pour générer du courant, l'installation de fourniture de combustible et l'installation de fourniture de réactif, étant sur le côté de la première électrode ou le côté de la seconde électrode,
**caractérisée en ce que**
- le combustible pour générer une certaine quantité de courant, est intégré dans le matériau d'une électrode (3) réalisée comme installation de fourniture de combustible (3), et
- aucun canal d'alimentation de combustible ni réservoir de combustible supplémentaire, ne sont prévus.

2. Pile à combustible selon la revendication 1,
selon laquelle
l'installation de fourniture de combustible (3) se compose d'un matériau de contact chargé de combustible.

3. Pile à combustible selon la revendication 1 ou 2,
selon laquelle
l'installation de fourniture de combustible (3) contient du palladium (Pd).

4. Pile à combustible selon l'une des revendications précédentes,
selon laquelle
l'hydrogène comme combustible, est intégré dans l'installation de fourniture de combustible (3).

5. Pile à combustible selon l'une des revendications précédentes,
selon laquelle
l'installation de fourniture de réactif qui fournit le réactif (O₂), se compose au moins de la seconde électrode ou de l'espace entourant la zone de réaction.

6. Circuit électrique (7, 16) comportant :
une pile à combustible (1) selon l'une des revendications 1 à 5, équipée d'une installation de fourniture de combustible (3) selon l'une des revendications précédentes.

7. Circuit électrique selon la revendication 6,
réalisé sous la forme d'un circuit CMOS.

8. Procédé de fabrication d'une pile à combustible comportant :
une première électrode (3), une seconde électrode (4) et une couche (5) perméable aux protons et séparant les électrodes, ayant un effet catalytique ou réalisé en plus de la couche (5) avec un matériau catalytique entre les électrodes (3, 4),
**caractérisé en ce que**
une installation de fourniture de combustible ou une installation de fourniture de réactif, sont réalisées en une seule pièce avec une des électrodes (3),
la matière de l'installation de fourniture de combustible étant chargée de combustible au moment de sa fabrication ou à la suite de celle-ci.

9. Pile à combustible selon l'une des revendications précédentes, **caractérisé en ce que**
- le réactif générant une quantité donnée de courant, est intégré dans le matériau d'une des électrodes, réalisée comme installation fournissant le réactif (3), et
- la pile à combustible est réalisée pour que le réactif ne puisse réagir avec le combustible, qu'à partir de cette installation de fourniture de réactif, et
aucune alimentation externe n'est prévue pour le réactif.

10. Pile à combustible selon la revendication 9,
selon laquelle
l'installation de fourniture de réactif (3) se compose d'un matériau de contact chargé du réactif.

11. Pile à combustible selon la revendication 9 ou 10,
selon laquelle
l'oxygène comme réactif, est intégré dans l'installation de fourniture de réactif (3).

12. Circuit électrique (7, 16), notamment circuit CMOS comportant :
une pile à combustible (1) selon l'une des revendications 9 à 11, qui comporte une installation de fourniture de réactif (3) selon l'une des revendications 4 à 16.
